# FASCICULE DE BREVET EUROPEEN

(11) **EP 0 894 935 B1**
(45) Date de publication et mention de la délivrance du brevet: **29.10.2003**
(21) Numéro de dépôt: 98401934.9
(22) Date de dépôt: 29.07.1998
(51) Int. Cl.: E06B 3/67, A47F 3/04, H05B 3/84

(54) **Elément vitré isolant**
Isolierverglasungselement
Insulating glazing element

(30) Priorité: 31.07.1997 FR 9709772; 06.10.1997 FR 9712409
(43) Date de publication de la demande: 03.02.1999
(73) Titulaire: SAINT-GOBAIN GLASS FRANCE, 92400 Courbevoie (FR)
(72) Inventeur: Poix, René, 60400 Noyon (FR); Demars, Yves, 60600 Clermont (FR)
(74) Mandataire: Muller, René

(56) Documents cités:
- EP-A- 0 645 516
- GB-A- 2 292 581
- US-A- 3 655 939
- US-A- 3 911 245
- US-A- 5 256 858

## Description

L'invention concerne des éléments vitrés isolants composés d'au moins deux feuilles de verre séparées l'une de l'autre par un faible espace dans lequel le vide a été réalisé.

Il est usuel pour obtenir une isolation thermique et/ou acoustique de réaliser des vitrages isolants comportant deux feuilles de verre séparées l'une de l'autre par une lame d'air relativement importante. De tels vitrages apportent une isolation thermique jugées insatisfaisante pour certaines applications. Pour y remédier, il est connu de réaliser des vitrages comportant trois feuilles de verre et l'une des lames d'air pouvant être remplacée par un gaz, par exemple, le krypton. Ces vitrages ont des propriétés d'isolation thermique nettement améliorées, mais sont d'une épaisseur telle qu'il n'est pas toujours aisé de les utiliser.

Par ailleurs, la demande actuelle des utilisateurs s'oriente vers une isolation thermique des vitrages équivalente à celle des parois pleines, c'est-à-dire des murs.

Il a déjà été proposé, notamment dans la demande de brevet EP-A-0 645 516 des vitrages isolants constitués de deux feuilles de verre séparées l'une de l'autre par un faible espace dans lequel le vide a été réalisé. Les feuilles de verre sont séparées l'une de l'autre par des plots répartis sur toute la surface et réunies à leur périphérie par un joint de scellage minéral.

Ces vitrages procurent du fait du vide une très bonne isolation mais du fait de cette très bonne isolation, ils peuvent être rapidement recouverts de condensation, voire de givre, par exemple lors d'une augmentation "brutale" de la température de l'air ambiant. En effet, du fait du vide réalisé entre les deux feuilles de verre constituant le vitrage, il n'existe pas de transfert thermique entre les deux feuilles de verre. De cette manière, chaque feuille de verre est à la température de l'air ambiant vers lequel elle est orientée et leur températures respectives n'interfèrent pas entre elles contrairement aux vitrages isolants usuels. Lors d'une augmentation "brutale" de la température de l'air ambiant, la face du vitrage orientée vers cet air ambiant ne se réchauffe pas à la même vitesse et peut ainsi présenter une température inférieure à la température de point de rosée de cet air ambiant, d'où l'apparition de condensations, voir même de givre si la température de la feuille de verre est très basse. Par augmentation "brutale" de température de l'air ambiant, on entend une augmentation de température dont la vitesse de variation est sensiblement supérieure à la vitesse de variation conséquente de la température de la feuille de verre en contact avec cet air ambiant.

Ainsi, malgré leur très bonne isolation, ces types de vitrages isolants perdent leur fonction première lors de certaines applications, telles que, par exemple, comme porte d'enceinte frigorifique après ouverture, c'est-à-dire qu'ils ne remplissent plus leur fonction de visibilité au travers de la paroi du fait de cette perte de transparence temporaire.

En dehors des vitrages isolants sous vide, on connaît d'après le document US 3 911 245 un vitrage isolant comprenant deux feuilles de verre qui sont séparées par une lame d'air, des éléments de chauffage, qui consistent en des couches conductrices, étant déposés sur les faces internes des feuilles de verre pour justement éviter des problèmes de condensation.

Le chauffage des faces internes de feuilles de verre d'un vitrage isolant par des couches conductrices est aussi divulgué dans le document US 3 655 939.

L'invention a pour but de réaliser un élément vitré isolant, composé d'au moins deux feuilles de verre séparées l'une de l'autre par un faible espace dans lequel le vide a été réalisé, qui permet de limiter l'apparition de condensation ou de givre.

L'invention propose ainsi un élément vitré constitué d'au moins deux feuilles de verre entre lesquelles un vide a été réalisé, séparées l'une de l'autre par des plots répartis sur toute la surface et réunies à leur périphérie par un joint de scellage minéral, les deux faces internes dudit élément vitré étant recouvertes d'au moins une couche conductrice en tant qu'élément de chauffage et les plots en contact avec ces couches étant faits de matériaux électriquement conducteur. De cette manière, il est possible de chauffer la feuille de verre pourvue de l'élément de chauffage à une température supérieure à la température de point de rosée de l'air ambiant en contact avec cette feuille. Toute apparition de condensation ou de givre est ainsi évitée et l'élément vitré garde son caractère transparent. De plus, grâce à la bonne performance d'isolation thermique de l'élément, il est possible de réaliser un vitrage avec une seule ou deux faces chauffantes suivant les applications visées.

Selon un mode de réalisation préféré de l'invention, au moins une couche conductrice déposée sur au moins une face interne dudit élément vitré s'étend entre deux lignes collectrices d'amenée du courant. On entend par face interne, une face ultérieurement au contact du vide. Avantageusement, en déposant une couche conductrice sur une face interne, on évite toute dégradation possible ultérieure, par exemple par un nettoyage trop agressif de l'élément vitré.

Avantageusement, la couche conductrice est une couche basse émissive conductrice d'oxyde métallique telle que par exemple une couche d'oxyde d'étain dopé au fluor déposée par pyrolyse ou de métal telle que, par exemple, une couche à base d'argent déposée sous vide, cette couche pouvant contribuer à la fonction d'isolation thermique.

Selon la réalisation de l'invention, les deux faces internes dudit élément vitré sont donc recouvertes d'au moins une couche conductrice et les plots en contact avec ces couches sont fait en matériau électriquement conducteur. On entend par plot, l'ensemble constitué par l'espaceur en lui-même et l'élément de collage de cet espaceur aux feuilles de verre s'il y en a un. Cette réalisation présente l'avantage de réaliser le chauffage des deux feuilles de verre de l'élément vitré à partir d'une unique paire de lignes collectrices, par exemple agencées sur une des feuilles de verre. Selon cet exemple, la première feuille de verre est chauffée de manière classique, le courant électrique circulant entre les deux lignes collectrices et la seconde feuille de verre est chauffée grâce au passage du courant électrique au travers des plots répartis sur toute la surface de la couche conductrice étendue entre les deux lignes collectrices.

La réalisation d'un tel élément vitré isolant présentant une couche conductrice sur au moins une face interne dudit élément vitré est loin d'avoir été immédiate pour l'homme de l'art. En effet, les vitrages isolants constitués d'au moins deux feuilles de verre séparées l'une de l'autre par un faible espace à l'intérieur duquel le vide a été réalisé doivent présenter une étanchéité de l'ensemble qui résiste dans le temps de manière incontestable. Aussi la réalisation d'une jonction entre l'espace où le vide a été réalisé et l'extérieur, telle que par exemple une jonction électrique, crée une zone où l'étanchéité de l'ensemble peut être fragilisée, ce qui nuit à la valeur du vitrage isolant.

Pour palier à ce problème de maintien de l'étanchéité, les inventeurs ont su mettre en évidence différents types de réalisations d'élément vitré isolant présentant une couche chauffante sur une face interne dudit élément vitré.

Selon un premier mode de réalisation de l'invention, l'élément vitré est constitué d'au moins deux feuilles de verre de dimensions différentes et les lignes collectrices sont agencées sur la feuille de verre de plus grande dimension et traversent le joint de scellage dudit élément vitré. De cette manière, il est possible de réaliser la connexion desdites lignes collectrices au circuit d'alimentation de courant en dehors de l'espace où le vide a été réalisé et cela sans perturber la constitution de l'élément vitré en lui-même, c'est-à-dire en ne créant pas de zones où l'étanchéité de l'ensemble peut être remise en cause. En effet, de manière avantageuse, les lignes collectrices sont faites d'une composition électro-conductrice à base de pâte d'argent et sont déposées directement sur la feuille de verre par un procédé de sérigraphie. Ainsi, le fait qu'elles traversent le joint de scellage qui est fait d'une composition minérale, ne fragilise pas le scellage des deux feuilles de verre. Ces lignes collectrices ne perturbent donc pas l'étanchéité de l'ensemble.

Selon un deuxième mode de réalisation de l'invention, l'élément vitré est constitué d'au moins deux feuilles de verre de dimensions différentes et les lignes collectrices sont agencées sur la feuille de verre de plus grande dimension à l'extérieur de l'espace où le vide a été réalisé.

Cette réalisation présente l'avantage de ne pas modifier la constitution de l'élément vitré isolant tout en offrant la possibilité de chauffer la zone du joint de scellage, zone qui est sensible au transfert thermique.

Selon un troisième mode de réalisation de l'invention, l'élément vitré est constitué d'une feuille de verre comportant deux trous traversants colmatés, ces trous étant respectivement positionnés face aux deux lignes collectrices agencées sur l'autre feuille et ces trous colmatés réalisent la connexion électrique des lignes collectrices. Cette réalisation préférée de l'invention présente l'avantage de réaliser un élément vitré dont les feuilles de verre sont de même dimension et de fournir, éventuellement, à l'orifice de pompage un double emploi. En effet, après pompage, le colmatage des trous est réalisé à partir d'un matériau conducteur, tel que par exemple un alliage d'étain, qui vient en contact avec la ligne collectrice en vis-à-vis et qui est relié à un dispositif d'alimentation électrique.

Avantageusement et indépendamment de la connexion des lignes collectrices par l'intermédiaire de ces trous colmatés, les inventeurs ont su mettre en évidence que la présence de deux trous traversant permet de réaliser un pompage de manière uniforme et cela en particulier pour des éléments vitrés de grandes dimensions.

Selon plusieurs variantes de l'invention, l'élément vitré isolant est également muni d'au moins un élément de chauffage au niveau de son joint de scellage. De cette manière, le chauffage de cette zone particulièrement sensible au transfert thermique permet en cas de nécessité d'éviter ou d'éliminer la formation de condensation lors d'importante variation de température entre les deux atmosphères séparées par l'élément vitré isolant.

Selon une première variante de l'invention, un cordon de chauffage est noyé dans le joint de scellage dudit élément vitré. Cette réalisation est avantageusement esthétique et facile à mettre en oeuvre.

Selon une seconde variante de l'invention, le joint de scellage dudit élément vitré est électriquement conducteur et est pourvu de deux connecteurs. Cette réalisation présente l'avantage de ne pas modifier les caractéristiques mécaniques, ni la résistance du joint de scellage.

Selon une troisième variante de l'invention, une couche conductrice est déposée au niveau du joint de scellage sur au moins une face interne dudit élément vitré.

Selon une réalisation de l'invention, la couche conductrice est une couche à base de pâte d'argent déposée par sérigraphie et selon une autre réalisation de l'invention, la couche conductrice est une couche mince d'oxyde métallique telle que, par exemple, une couche d'oxyde d'étain dopé au fluor déposée par pyrolyse.

D'autres détails et caractéristiques avantageuses ressortiront, ci-après de la description d'exemples de réalisation de l'invention en référence aux figures 1a, 1b, 2a, 2b, 3a et 3b qui représentent:
- **Fig. 1a :**: une vue de face d'un élément vitré isolant selon l'invention.
- **Fig. 1b :**: une coupe horizontale de l'élément vitré isolant de la fig. 1a.
- **Fig. 2a :**: une vue de face d'un autre type d'élément vitré isolant selon l'invention.
- **Fig. 2b :**: une coupe verticale de l'élément vitré isolant de la fig. 2a.
- **Fig. 3a :**: une vue de face d'un troisième type d'élément vitré isolant selon l'invention.
- **Fig. 3b :**: une coupe horizontale de l'élément vitré isolant selon l'invention.

On précise tout d'abord que, par souci de clarté, toutes les figures ne respectent pas rigoureusement les proportions entre les divers éléments représentés.

L'élément vitré isolant 1 est constitué de deux feuilles de verre trempé 2 et 3 entre lesquelles un vide 4 a été réalisé, séparées l'une de l'autre par des plots 5 répartis sur toute la surface et réunies à leur périphérie par un joint de scellage minéral 6.

Selon cette représentation, la feuille de verre 3 est revêtue sur sa face interne d'une couche mince métallique 7 basse émissive conductrice déposée par exemple par une technique de pyrolyse et s'étendant entre deux lignes collectrices 8 parallèles.

Cette couche mince métallique 7 conductrice est une couche à base d'oxyde métallique telle que, par exemple, une couche d'oxyde d'étain dopé au fluor et présente une épaisseur géométrique comprise entre 180 et 350 nanomètres et une résistance inférieure ou égale à 50 ohms par carré et de préférence inférieur ou égale à 20 ohms par carré.

Les bandes collectrices 8 sont réalisées à base d'une composition électriquement conductrice faite d'une suspension pâteuse dans un liant, d'une composition d'argent métallique et d'une fritte de verre. Elles sont généralement déposées directement sur la feuille de verre par un procédé de sérigraphie et cuites lors du traitement thermique précédent la trempe du verre.

Les plots 5 ont une épaisseur de 0,2 millimètre et un diamètre de 0,4 millimètre. Ils sont répartis sur toute la surface des feuilles de verre et sont distants les uns des autres de 30 millimètres.

Les plots 5 sont déposés sur une des feuilles de verre 2 et 3 après que la feuille de verre 3 ait été revêtue de la couche mince métallique 7 et des bandes collectrices 8 et que les deux feuilles de verre 2 et 3 aient été trempées. Après dépôt d'un cordon de fritte de verre 6 à la périphérie de la feuille de verre 2, les deux feuilles de verre 2 et 3 sont assemblées, puis on effectue un traitement thermique de l'ensemble pour réaliser la soudure des deux feuilles de verre 2 et 3, le joint de scellage 6 réalisant alors l'étanchéité de l'ensemble. On réalise alors le vide entre les deux feuilles de verre 2 et 3 par tous moyens connus de l'homme du métier tels que, par exemple, par le procédé décrit dans la demande de brevet française déposée au nom de SAINT-GOBAIN VITRAGE sous le numéro 96/09632.

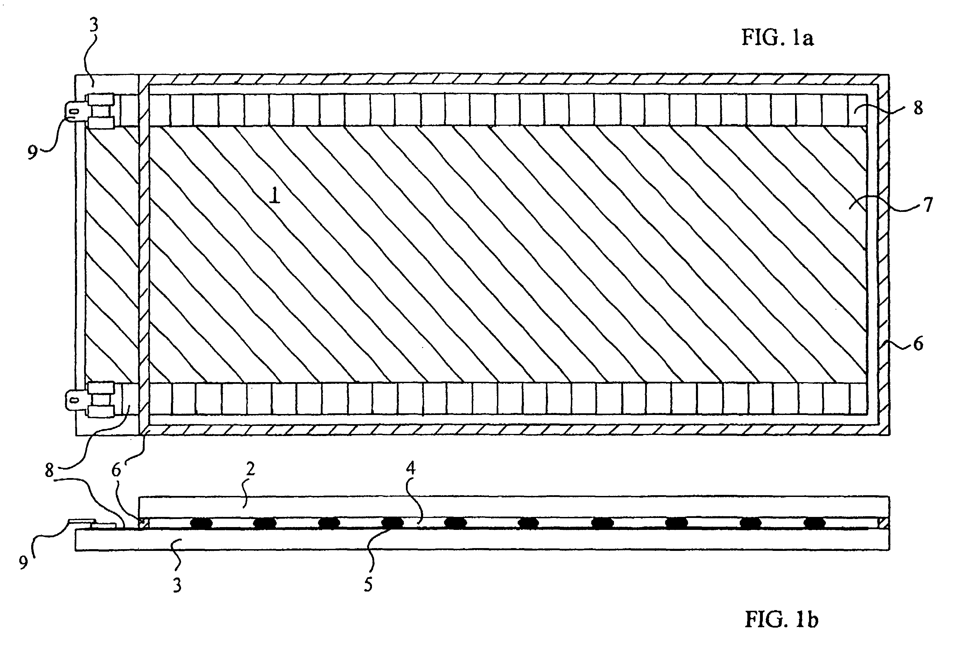

**Les figures 1a et 1b** représentent un premier type de réalisation d'un élément vitré isolant selon l'invention. Selon cette réalisation, la feuille de verre 2 est de dimension inférieure à la feuille de verre 3 de sorte que, une fois les deux feuilles de verre 2 et 3 sont assemblées, seul un bord de la feuille de verre 3 dépasse de l'ensemble. Les deux lignes collectrices 8 sont agencées de manière parallèle à l'intérieur de l'espace où le vide a été réalisé, chacune le long d'un bord de l'ensemble de sorte que les deux lignes collectrices traversent le joint de scellage du côté où la feuille de verre 3 dépasse de l'ensemble. Au niveau du bord débordant de la feuille de verre 3, des connecteurs 9 sont fixés aux lignes collectrices 8 agencées sur cette partie, les connecteurs 9 pouvant être, par exemple, des connecteurs du type de ceux utilisés pour les lunettes chauffantes de véhicules automobiles.

Ce type de réalisation présente l'avantage, du fait de la composition des lignes collectrices, de ne pas fragiliser le joint de scellage au niveau où les lignes collectrices traversent celui-ci et ainsi permet de réaliser une connexion à un dispositif d'alimentation électrique facile d'accès.

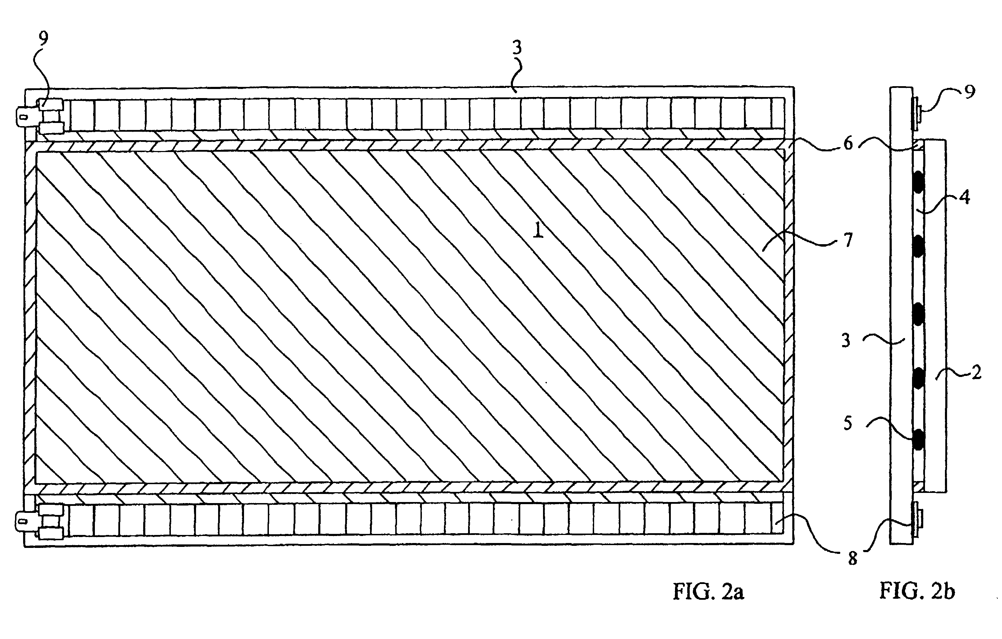

**Les figures 2a et 2b** représentent un second type de réalisation de l'élément vitré isolant selon l'invention.

Selon cette réalisation, la feuille de verre 2 est de dimension inférieure à la feuille de verre 3 de sorte que, une fois les deux feuilles de verre assemblées, la feuille de verre 3 présente deux parties débordantes parallèles. Les deux lignes collectrices 8 sont agencées respectivement chacune sur une des deux parties débordantes, c'est-à-dire à l'extérieure de l'espace où le vide a été réalisé. Chaque ligne collectrice 8 est reliée à un connecteur 9 permettant de réaliser la connexion à un dispositif d'alimentation électrique. Ce type d'élément vitré présente l'avantage de ne pas modifier la structure intégrant l'espace où le vide a été réalisé.

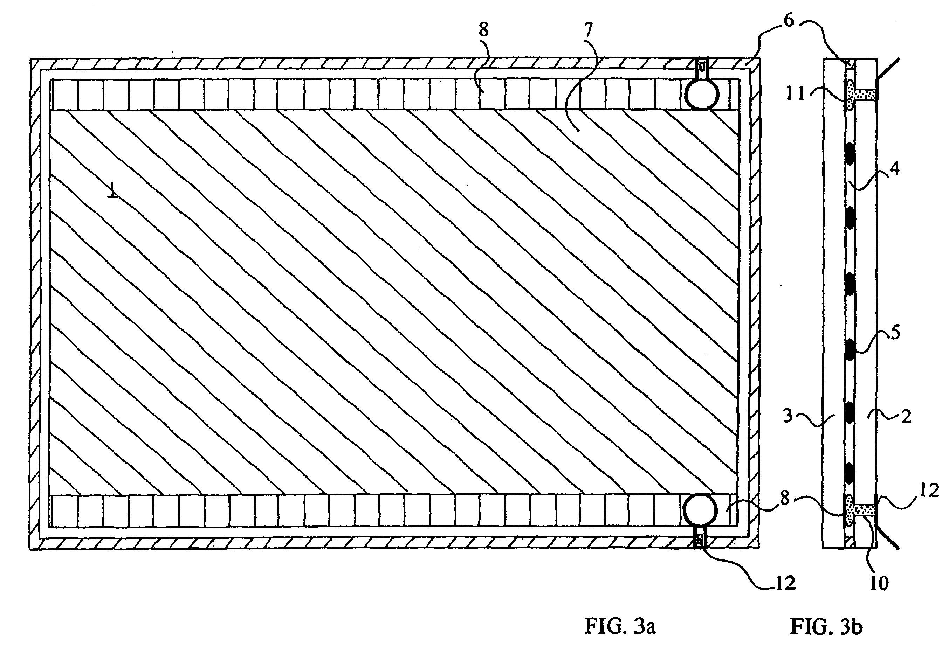

**Les figures 3a et 3b** représentent un troisième type de réalisation de l'élément vitré isolant selon l'invention.

Selon cette réalisation, les deux feuilles de verre 2 et 3 sont de même dimension et la feuille de verre 2 présente deux trous traversant 10 positionnés chacun face à une ligne collectrice 8. Après avoir réalisé le vide, les deux trous sont colmatés à l'aide d'un alliage métallique conducteur 11 tel que, par exemple, un alliage d'étain, qui vient en contact avec la ligne collectrice 8. Un connecteur 12 de type, par exemple, cosse est alors fixé au niveau des trous 10 colmatés afin de permettre la connexion à un dispositif d'alimentation électrique. Le type d'élément vitré isolant présente l'avantage d'être particulièrement esthétique du fait de sa quasi uniformité de surface.

Les différents types d'éléments vitrés isolants ainsi décrits sont faciles à réaliser et permettent de réaliser la connexion d'une couche chauffante déposée sur au moins une face interne sans fragiliser l'élément vitré en lui-même et en particulier sans créer de zone sensible où l'étanchéité de l'ensemble pourrait être remise en cause. Les éléments vitrés procurent ainsi une isolation thermique incontestable tout en conservant leur transparence quelles que soient leurs conditions d'utilisation.

L'invention ne se limite pas à ces types de réalisation et doit être interprétée de façon non limitative et englobant tous types d'élément vitré isolant constitué d'au moins deux feuilles de verre entre lesquelles un vide a été réalisé et pourvu d'au moins un élément chauffant sur au moins une partie d'au moins une face d'au moins une feuille de verre, et tels que définis dans les revendications annexées.

## Revendications

1. Elément vitré isolant (1) constitué d'au moins deux feuilles de verre (2, 3) entre lesquelles un vide a été réalisé, séparées l'une de l'autre par des plots (5) répartis sur toute la surface et réunies à leur périphérie par un joint de scellage minéral (6), **caractérisé en ce que** chacune des deux faces internes desdites feuilles de verre (2,3) est recouverte d'au moins une couche conductrice (7) en tant qu'élément de chauffage et **en ce que** les plots (5) en contact avec ces couches (7) sont faits de matériaux électriquement conducteur.

2. Elément vitré isolant selon la revendication 1, **caractérisé en ce qu'**au moins une couche conductrice (7) déposée sur au moins une face interne dudit élément vitré s'étend entre deux lignes collectrices d'amenée du courant (8).

3. Elément vitré isolant selon la revendication 2, **caractérisé en ce que** ladite couche conductrice (7) est une couche basse émissive conductrice à base d'oxyde métallique ou de métal.

4. Elément vitré isolant selon la revendication 2, **caractérisé en ce que** ledit élément vitré est constitué d'au moins deux feuilles de verre (2, 3) de dimensions différentes et **en ce que** les lignes collectrices (8) sont agencées sur la feuille de verre de plus grande dimension et traversent le joint de scellage (6) dudit élément vitré.

5. Elément vitré isolant selon la revendication 2, **caractérisé en ce que** ledit élément vitré est constitué d'au moins deux feuilles de verre (2, 3) de dimensions différentes et **en ce que** les lignes collectrices (8) sont agencées sur la feuille de verre de plus grande dimension à l'extérieur de l'espace ou le vide a été réalisé.

6. Elément vitré isolant selon la revendication 2, **caractérisé en ce que** ledit élément vitré comporte deux trous (10) traversant une feuille de verre, colmatés, face aux lignes collectrices (8) disposées sur l'autre feuille de verre, lesdits trous colmatés réalisant la connexion électrique des lignes collectrices.

7. Elément vitré selon l'une des revendications précédentes, **caractérisé en ce qu'**un cordon de chauffage est noyé dans le joint de scellage (6) dudit élément vitré.

8. Elément vitré isolant selon l'une des revendications 1 à 6, **caractérisé en ce que** le joint de scellage minéral (6) dudit élément vitré est électriquement conducteur et pourvu de deux connecteurs (9).

## Patentansprüche

1. Isolierglaselement (1), das aus mindestens zwei Glasscheiben (2, 3) besteht, zwischen denen ein Vakuum erzeugt worden ist, die voneinander durch über die gesamte Fläche verteilte Stifte (5) getrennt und am Umfang durch eine anorganische Versiegelung (6) miteinander verbunden sind, **dadurch gekennzeichnet, dass** jede der zwei Innenseiten der Glasscheiben (2, 3) mit mindestens einer leitfähigen Schicht (7) als Beheizungselement überzogen ist, und dass die mit diesen Schichten (7) in Kontakt befindlichen Stifte (5) aus elektrisch leitfähigem Material hergestellt sind.

2. Isolierglaselement nach Anspruch 1, **dadurch gekennzeichnet, dass** wenigstens eine leitfähige Schicht (7), die auf mindestens einer Innenseite des Isolierglaselements aufgebracht ist, sich zwischen zwei Sammelleitungen (8) für die Stromzuführung erstreckt.

3. Isolierglaselement nach Anspruch 2, **dadurch gekennzeichnet, dass** die leitfähige Schicht (7) eine niedrig emittierende leitfähige Schicht auf der Basis eines Metalloxids oder eines Metalls ist.

4. Isolierglaselement nach Anspruch 2 , **dadurch gekennzeichnet, dass** es aus mindestens zwei Glasscheiben (2, 3) mit unterschiedlichen Abmessungen besteht, **und dass** die Sammelleitungen (8) auf der Glasscheibe mit den größeren Abmessungen angeordnet sind und durch die Versiegelung (6) des Isolierglaselements hindurchführen.

5. Isolierglaselement nach Anspruch 2, **dadurch gekennzeichnet, dass** es aus mindestens zwei Glasscheiben (2, 3) mit unterschiedlichen Abmessungen besteht, und dass die Sammelleitungen (8) auf der Glasscheibe mit den größeren Abmessungen außerhalb des Zwischenraums, worin das Vakuum erzeugt worden ist, angeordnet sind.

6. Isolierglaselement nach Anspruch 2, **dadurch gekennzeichnet, dass** es zwei abgedichtete Löcher (10) enthält, die durch eine Glasscheibe führen, sich gegenüber den auf der anderen Glasscheibe angeordneten Sammelleitungen (8) befinden und den elektrischen Anschluss der Sammelleitungen realisieren.

7. Isolierglaselement nach einem der vorhergehenden Ansprüche, **dadurch gekennzeichnet, dass** in die Versiegelung (6) des Isolierglaselements eine Heizschnur eingebettet ist.

8. Isolierglaselement nach einem der Ansprüche 1 bis 6, **dadurch gekennzeichnet, dass** die anorganische Versiegelung (6) des Isolierglaselements elektrisch leitfähig und mit zwei Stromanschlüssen (9) versehen ist.

## Claims

1. Insulating glazed element (1) formed from at least two sheets of glass (2, 3) between which a vacuum has been produced, separated from each other by studs (5) distributed over the entire surface and joined at their periphery by a mineral sealing joint (6), **characterised in that** each of the two internal faces of the said sheets of glass (2, 3) is covered with at least one conductive layer (7) as a heating element and **in that** the studs (5) in contact with these layers (7) are made from electrically conductive materials.

2. Insulating glazed element according to Claim 1, **characterised in that** at least one conductive layer (7) deposited on at least one internal face of the said glazed element extends between two current feed collecting lines (8).

3. Insulating glazed element according to Claim 2, **characterised in that** the said conductive layer (7) is a low-emissive conductive layer based on metallic oxide or metal.

4. Insulating glazed element according to Claim 2, **characterised in that** the said glazed element consists of at least two sheets of glass (2, 3) with different dimensions and **in that** the collecting lines (8) are arranged on the largest sheet of glass and pass through the sealing joint (6) of the said glazed element.

5. Insulating glazed element according to Claim 2, **characterised in that** the said glazed element is formed from at least two sheets of glass (2, 3) of different sizes and **in that** the collecting lines (8) are arranged on the largest sheet of glass outside the space where the vacuum was produced.

6. Insulating glazed element according to Claim 2, **characterised in that** the said glazed element comprises two holes (10) passing through a sheet of glass, filled in, facing the collecting lines (8) disposed on the other sheet of glass, the said filled-in holes making the electrical connection of the collecting lines.

7. Glazed element according to one of the preceding claims, **characterised in that** a heating bead is embedded in the sealing joint (6) of the said glazed element.

8. Insulating glazed according to one of Claims 1 to 6, **characterised in that** the mineral sealing joint (6) of the said glazed element is electrically conductive and provided with two connectors (9).
